# EUROPÄISCHE PATENTSCHRIFT

(11) **EP 1 159 553 B1**
(45) Veröffentlichungstag und Bekanntmachung des Hinweises auf die Patenterteilung: **26.06.2002**
(21) Anmeldenummer: 00915157.2
(22) Anmeldetag: 29.02.2000
(51) Int. Cl.: F16H 61/40

(54) **HYDRAULISCHER ANTRIEB**
HYDRAULIC DRIVE
DISPOSITIF D'ENTRAINEMENT HYDRAULIQUE

(30) Priorität: 06.03.1999 DE 19909994
(43) Veröffentlichungstag der Anmeldung: 05.12.2001
(73) Patentinhaber: ZF FRIEDRICHSHAFEN Aktiengesellschaft, 88038 Friedrichshafen (DE)
(72) Erfinder: GEBHARD, Wolfgang, D-88048 Friedrichshafen (DE)
(86) Internationale Anmeldenummer: EP0001679
(87) Internationale Veröffentlichungsnummer: WO0053958

(56) Entgegenhaltungen:
- DE-A- 4 313 025
- US-A- 4 323 137
- US-A- 4 554 992

## Beschreibung

Die Erfindung betrifft einen hydraulischen Antrieb nach der im Oberbegriff von Anspruch 1 näher definierten Art.

Hydraulische Antriebe, bestehend aus einer hydraulischen Pumpe, welche Druckflüssigkeit zu einem hydraulischen Motor fördert, die Druckflüssigkeit den hydraulischen Motor durchströmt und danach wieder zur hydraulischen Pumpe zurückgeführt wird sind allgemein bekannt und werden häufig in mobilen Fahrzeugen und Kraft- und Arbeitsmaschinen eingesetzt. Die Verlustleistung des hydraulischen Antriebs und gegebenenfalls einem nachgeschalteten Getriebe werden von der Druckflüssikeit des hydraulischen Antriebs aufgenommen und häufig über einen Wärmetauscher, welcher mit der Druckflüssigkeit durchflossen wird, an die Umgebung abgegeben.

Die DE-43 13 025 A1 offenbart einen hydraulischen Antrieb in einem hydrostatisch mechanischen Getriebe zum Antrieb einer Mischtrommel, bei welchem eine hydraulische Pumpe einen hydraulischen Motor antreibt, welcher über ein Untersetzungsgetriebe mit einer Mischtrommel in Verbindung steht. Die Verlustleistung des hydraulischen Antriebs und des Untersetzungsgetriebes wird von der Druckflüssigkeit aufgenommen und über einen Wärmetauscher an die Umgebung abgegeben. Dabei ist im hydraulischen Motor ein Ventil angeordnet, welches einen Teil der vom hydraulischen Motor zur hydraulischen Pumpe zurückfließenden Druckflüssigkeit durch eine Öffnung im Gehäuse des hydraulischen Motors abführt und in das Gehäuse der hydraulischen Pumpe leitet.

Dort wird die Druckflüssigkeit mit der Leckage der Pumpe addiert und über eine Öffnung in dem Gehäuse der hydraulischen Pumpe zu einem Wärmetauscher geleitet. Die Druckflüssigkeit durchfließt den Wärmetauscher und wird danach wieder in das Reservoir geleitet. Aus dem Reservoir saugt eine Füllpumpe Druckflüssigkeit an und leitet diese in den hydraulischen Kreis zwischen der hydraulischen Pumpe und dem hydraulischen Motor.

Da sich bei tieferen Temperaturen die Viskosität der Druckflüssigkeit erhöht, erhöht sich auch der Durchflußwiderstand des Wärmetauschers. Aus diesem Grund baut sich vor dem Wärmetauscher ein Druck auf, welcher die Abdichtungen und das Gehäuse der hydraulischen Pumpe unzulässig belastet.

Der vorliegenden Erfindung liegt die Aufgabe zugrunde, einen hydraulischen Antrieb zu schaffen, bei welchem die Verlustleistung des Antriebs mit Hilfe eines Wärmetauschers abgeführt wird und beim Start des hydraulischen Antriebs und dem anschließenden Betrieb mit erhöhter Viskosität der Druckflüssigkeit keine unzulässigen Drücke im Gehäuse der hydraulischen Pumpe und dem Wärmetauscher auftreten und die Druckflüssigkeit schneller auf Betriebstemperatur gebracht wird.

Die Aufgabe wird mit einem auch die kennzeichnenden Merkmale des Hauptanspruchs aufweisenden gattungsgemäßen hydraulischen Antrieb gelöst.

Erfindungsgemäß fördert die hydraulische Pumpe Druckflüssigkeit zum hydraulischen Motor und fließt vom hydraulischen Motor wieder zurück zur hydraulischen Pumpe. Die Leckage der hydraulischen Pumpe wird über eine Öffnung im Gehäuse der hydraulischen Pumpe und einer anschließenden Leitung zum Wärmetauscher geleitet. Ein Ventil zweigt zusätzlich einen Teil der Druckflüssigkeit vom Rückfluß des hydraulischen Motors zur Pumpe ab und summiert diese mit der Druckflüssigkeit in der Leitung, durch welche die Leckage der hydraulischen Pumpe zum Wärmetauscher abgeführt wird. Somit wird durch die Öffnung im Gehäuse der hydraulischen Pumpe nur die Leckage der hydraulischen Pumpe geleitet und nicht zusätzlich der Teil der Druckflüssigkeit, welcher aus dem Rückfluß des hydraulischen Motors zur hydraulischen Pumpe abgezweigt wird. Dem Ventil, welches ein Teil der Druckflüssigkeit aus dem Rückfluß des hydraulischen Motors zur hydraulischen Pumpe abzweigt, ist direkt ein Druckbegrenzungsventil nachgeschaltet, welches immer dann öffnet, wenn ein unzulässiger Druck auftritt. Bei geöffnetem Druckbegrenzungsventil kann Druckflüssigkeit direkt ins Ölreservoir abfließen. Das Druckbegrenzungsventil ist so ausgelegt, daß bei zu hohem Durchflußwiderstands des Wärmetauschers soviel Druckflüssigkeit durch das Druckbegrenzungsventil in das Ölreservoir abgeleitet wird, daß im Gehäuse der hydraulischen Pumpe und im Wärmetauscher kein unzulässig hoher Druck entstehen kann. Vorzugsweise ist das Gehäuse des hydraulischen Motors als Ölreservoir ausgebildet. Dadurch gelangt beim Betrieb des Antriebs bei tiefen Temperaturen und erhöhter Viskosität der Druckflüssigkeit erwärmte Druckflüssigkeit, welche aus dem Gehäuse der hydraulischen Pumpe und dem geschlossenen Kreis zwischen hydraulischem Motor und hydraulischer Pumpe stammt, direkt in das Gehäuse des hydraulischen Motors und erwärmt somit den hydraulischen Motor und die Druckflüssigkeit in diesem Reservoir. Dadurch kann von der Füllpumpe schon erwärmte Druckflüssigkeit angesaugt werden. Wird die Betriebstemperatur des hydraulischen Antriebs erreicht, so sinkt der Durchflußwiderstand des Wärmetauschers auf einen zulässigen Wert und das Druckbegrenzungsventil schließt automatisch. Die erwärmte Druckflüssigkeit aus dem Gehäuse der hydraulischen Pumpe und dem abgezweigten Teil aus dem Rückfluß des hydraulischen Motors zur hydraulischen Pumpe durchfließt den Wärmetauscher und wird gekühlt in das Gehäuse des hydraulischen Motors eingeleitet. Vorzugsweise ist das Ventil, welches einen Teil der Druckflüssigkeit aus dem Rückfluß des Motors abzweigt, in das Gehäuse des Motors integriert; und das Druckbegrenzungsventil, welches verhindert, daß unzulässig hohe Drücke vor dem Wärmetauscher entstehen, ist ebenfalls in das Motorgehäuse integriert und dem Ventil, welches einen Teil der Druckflüssigkeit abzweigt, benachbart angeordnet. Dadurch ist es möglich, die Zuführung zu dem Druckbegrenzungsventil mit dem Abfluß des Ventils, welches einen Teil der Druckflüssigkeit abzweigt, zu verbinden, was zu einer sehr kompakten und kostengünstigen Ausführung führt; zusätzlich wird die Abflußleitung in das Ölreservoir verkürzt, um unnötige Strömungsverluste zu vermeiden. Da das Druckbegrenzungsventil im Motorgehäuse integriert ist, und das Motorgehäuse gleichzeitig das Reservoir für die Druckflüssigkeit darstellt und das Druckbegrenzungsventil im geöffneten Zustand die Druckflüssigkeit direkt in das Motorgehäuse ableiten kann, ist es möglich, diese Funktion ohne zusätzliche Bauteile und Leitungen zu realisieren. Wird als dem hydraulischen Motor nachgeschaltetes Getriebe ein Planetengetriebe verwendet und wird als hydraulischer Motor ein Radialkolbenmotor verwendet, so ist es möglich, als äußere Abgrenzung des Reservoirs für die Druckflüssigkeit die Gehäusewandung des Getriebes und die Gehäusewandung des hydraulischen Motors zu verwenden. Da der Innenraum des Getriebes und des hydraulischen Motors mindestens über die Hälfte mit Druckflüssigkeit bedeckt ist, wird zusätzlich beim Betrieb des hydraulischen Antriebs die kalte Druckflüssigkeit durch die Rotation der Bauteile schnell erwärmt, so daß die Betriebstemperatur des Antriebs schnell erreicht werden kann.

Weitere Ausgestaltungsmerkmale sind der Beschreibung des Ausführungsbeispiels zu entnehmen.
- Fig. 1: zeigt ein Hydaulikschema eines hydraulischen Antriebs .
- Fig. 2: zeigt einen Schnitt durch einen hydraulischen Motor mit Getriebe.

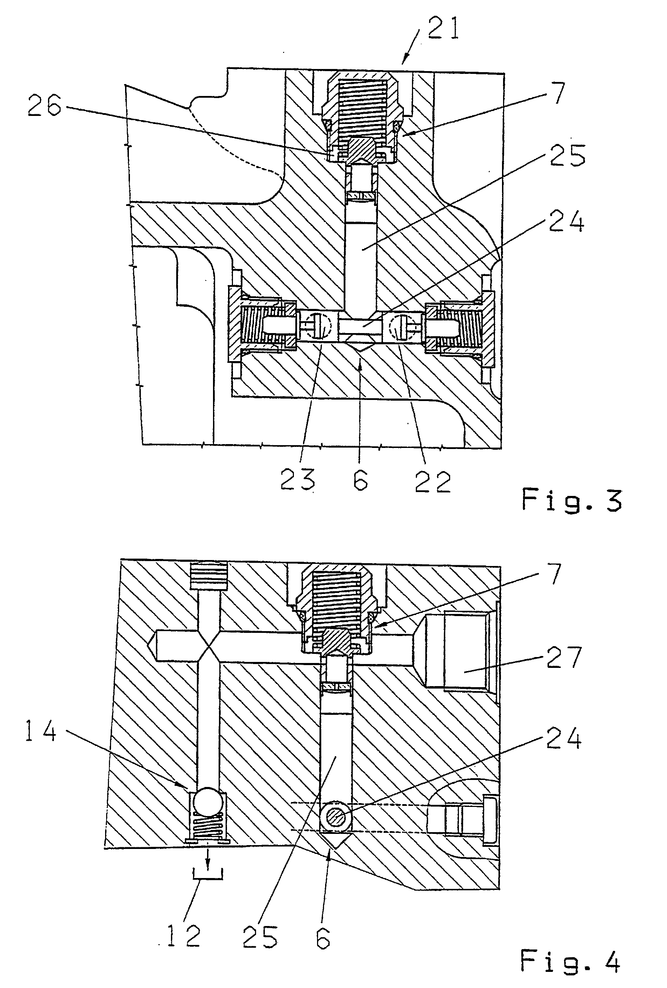

- Fig. 3: zeigt ein Ventil mit welchem ein Teil der vom Motor zurückfließenden Druckflüssigkeit abgeleitet werden kann.
- Fig. 4: zeigt den Einbau des Druckbegrenzungsventils in das Motorgehäuse.

### Fig. 1

Eine hydraulische in ihrem Fördervolumen verstellbare Pumpe 1 fördert je nach Förderrichtung Druckflüssigkeit in die Leitungen 2 oder 3. Die Leitungen 2 oder 3 sind mit einem hydraulischen Motor 4 verbunden. Der hydraulische Motor 4 treibt ein Planetengetriebe 5 an. Mit den Leitungen 2 und 3 ist ein Ventil 6 verbunden welches ein Ventil 7 immer mit der Leitung verbindet durch welche die Druckflüssigkeit vom hydraulischen Motor 4 zur Pumpe 1 zurückfließt. Das Ventil 7 und das Ventil 28 sind so eingestellt, daß ein bestimmter Mindestdruck in dem geschlossenen Kreislauf zwischen der Pumpe 1 und dem hydraulischen Motor 4 nicht unterschritten wird. Bei zu hohem Druck öffnet das Ventil 7, welches in seinem Druckniveau niedriger eingestellt ist als das Ventil 28 und läßt einen Teil der Druckflüssigkeit aus dem geschlossenen Kreis in die Leitung 8. Die Leitung 8 ist mit der Leitung 9 verbunden und so gelangt Druckflüssigkeit vom geschlossenen Kreis über das Ventil 7 und aus der Leckage der Pumpe 1 über einen Anschluß 10 in dem Gehäuse der Pumpe 1 zum Wärmetauscher 11. Die Druckflüssigkeit durchfließt den Wärmetauscher 11 und gelangt in das Reservoir 12. Das Reservoir 12 ist entweder drucklos oder über einen vorgespannten Entlüfter 13 mit einem geringen Druck beaufschlagt. Im Reservoir 12 ist der hydraulische Motor 4, das Getriebe 5 die Ventile 6 und 7, der Wärmetauscher 11 und ein Ventil 14, welches mit der Leitung 8 verbunden ist, angeordnet. Der Wärmetauscher 11, die Ventile 6 und 7 sowie das Ventil 14, der hydraulische Motor 4 und das Getriebe 5, können auch separat angeordnet sein. Bei dieser Anordnung ist es notwendig, einen separaten Reservoirbehälter zu installieren welcher mit dem Wärmetauscher 11 und der Ansaugleitung 15 der Füllpumpe 16 und einer Leckageleitung des hydraulischen Motors 4 verbunden ist. Bei dieser Anordnung werden jedoch zusätzliche Leitungen und der Reservoirbehälter benötigt. Durch die räumliche Trennung des Vetils 14 zum Reservoirbehälter kann durch die Strömungsverluste in der dem Ventil 14 nachgeschalteten Leitung ein Gegendruck entstehen, welcher sich ungünstig auswirkt. Arbeitet der hydraulische Antrieb bei seiner Betriebstemperatur oder darüber, so ist das Ventil 14 geschlossen. Beim Start des hydraulischen Antriebs oder beim Betrieb des hydraulischen Antriebs bei tieferen Temperaturen erzeugt der Wärmetauscher 11 einen erhöhten Durchflußwiderstand infolge erhöhter Viskosität der Druckflüssigkeit und es entsteht ein Druck in den Leitungen 8 und 9. Übersteigt dieser Druck einen bestimmten Wert, so öffnet das Ventil 14 und Druckflüssigkeit strömt in das Reservoir 12 ab. Das Ventil 14 ist so eingestellt, daß immer nur soviel Druckflüssigkeit abströmen kann, um den Druck in den Leitungen 8 und 9 auf einem zulässigen Niveau zu halten. Erwärmt sich die Druckflüssigkeit beim Betrieb des hydraulischen Antriebs, so sinkt der Durchflußwiderstand des Wärmetauschers 11 und der Druck in den Leitungen 8 und 9 fällt ab. Das Ventil 14 schließt und die erwärmte Druckflüssigkeit strömt durch den Wärmetauscher 11 in das Reservoir 12.

### Fig. 2

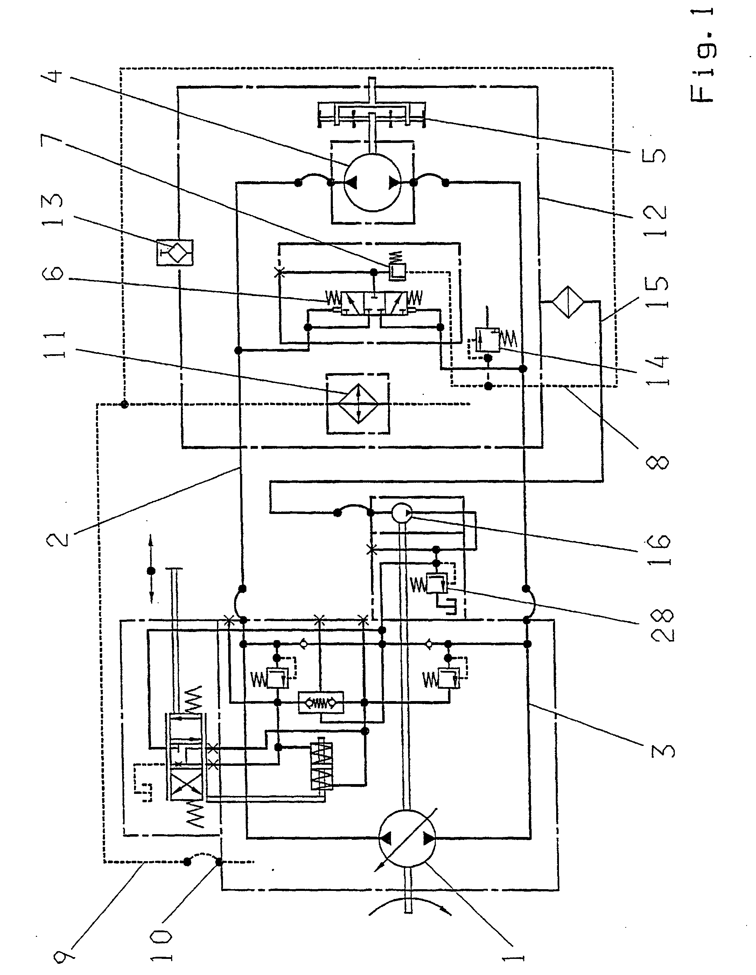

In einem Gehäuse 17 ist ein Motor 4 angeordnet und treibt ein inneres Zentralrad 18 einer Planetenstufe 19 an. Die Planetenstufe 19 ist in einem Getriebegehäuse 20 angeordnet, welches mit dem Gehäuse 17 verbunden ist. Das Gehäuse 20 und das Gehäuse 17 bilden zusammen ein Reservoir für die Druckflüssigkeit. Die Gehäuse 17 und 20 sind bis über die Hälfte mit Druckflüssigkeit gefüllt welche über eine Filteranordnung 21 zu einer Füllpumpe gelangt. Am Gehäuse 17 ist ein Wärmetauscher 11 angebaut. Im hinteren Bereich 21 des Gehäuses 17 sind die Anschlüsse für die Leitungen 2 und 3 sowie der Leitung 8 und die Ventile 6, 7 und 14 der Fig. 1 angeordnet.

### Fig. 3

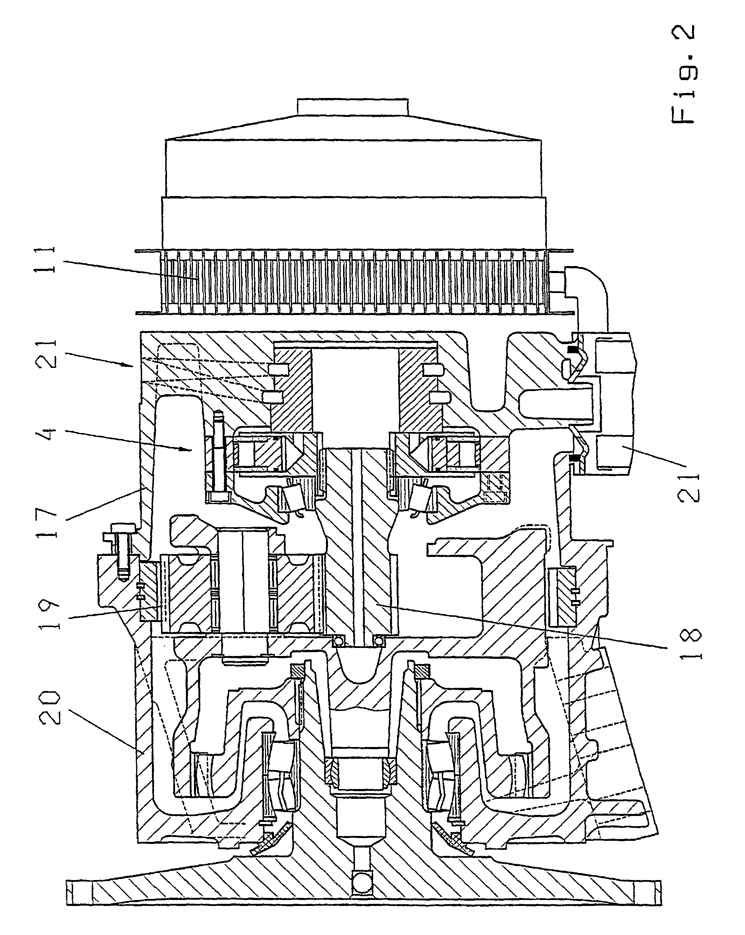

Im Bereich 21 des Gehäuses 17 der Fig. 2 sind die Ventile 6 und 7 angeordnet. Über die Bohrungen 22 und 23 welche mit den Leitungen 2 und 3 der Figur 1 verbunden sind, wird der Schieber 24 in axialer Richtung immer so ausgelenkt, daß die Leitung 25 mit der Leitung 2 oder 3 verbunden wird, in welcher die Druckflüssigkeit vom Motor 4 zur Pumpe 1 zurückfließt. Die Leitung 25 mündet in dem Ventil 7 welches in geöffnetem Zustand den Raum 26 mit der Leitung 25 verbindet. Die Leitung 8 wie in Fig. 1 dargestellt, ist mit dem Raum 26 verbunden.

### Fig. 4

Die Druckflüssigkeit, welche durch Umsteuern des Schiebers 24 des Ventils 6 in die Leitung 25 gelangt, öffnet das Ventil 7 und fließt zum Anschluß 27, welcher mit der Leitung 8 verbunden ist und zum Ventil 14. Steigt der Druck in der eitung 8 über einen zulässigen Wert, so öffnet das Ventil 14 und die Druckflüssigkeit aus der Leitung 8 kann über das Ventil 14 in das Reservoir 12 abfließen. Indem das Ventil 14, das Ventil 7 und das Ventil 6 benachbart in einem Gehäuse angeordnet sind und der Ausgang des Ventils 14 direkt in das Reservoir 12 abfließen kann, ist es möglich eine sehr kompakte, kostengünstige Lösung zu schaffen, bei welcher keine zusätzlichen Strömungsverluste dem Ventil 14 nachgeschaltet sind.

### Bezugszeichen

- 1: Pumpe
- 2: Leitung
- 3: Leitung
- 4: Motor
- 5: Getriebe
- 6: Ventil
- 7: Ventil
- 8: Leitung
- 9: Leitung
- 10: Anschluss
- 11: Wärmetauscher
- 12: Reservoir
- 13: Entlüfter
- 14: Ventil
- 15: Ansaugleitung
- 16: Füllpumpe
- 17: Gehäuse
- 18: Inneres Zentralrad
- 19: Planetenstufe
- 20: Gehäuse
- 21: Bereich
- 22: Bohrung
- 23: Bohrung
- 24: Schieber
- 25: Leitung
- 26: Raum
- 27: Anschluss
- 28: Ventil

## Patentansprüche

1. Hydraulischer Antrieb,
- bei welchem eine hydraulische Pumpe (1) Druckflüssigkeit zu einem hydraulischen Motor (4) fördert, welche anschließend vom hydraulischen Motor (4) zur Pumpe (1) zurückfließt,
- wobei eine Füllpumpe (16) Druckflüssigkeit aus einem Druckflüssigkeitsreservoir (12) entnimmt und in den hydraulischen Antrieb fördert,
- wobei ein Teil der Druckflüssigkeit aus der Rückflußleitung (2 bzw. 3) vom Motor (4) zur Pumpe (1) bzw. von der Pumpe (1) zum Motor (4) entnommen und mit der Leckageflüssigkeit der Pumpe (1) zusammengeführt und einem Wärmetauscher (11) und anschließend dem Druckflüssigkeitsreservoir (12) zugeführt wird,
- wobei die Leckageflüssigkeit der Pumpe (1) und die aus der Rückflußleitung (2 bzw. 3) entnommene Druckflüssigkeit in einer Leitung (9), durch welche die Leckageflüssigkeit der Pumpe (1) zum Wärmetauscher (11) abgeführt wird, zusammengeführt werden,
**dadurch gekennzeichnet,**
- **daß** ein Teil der Leckageflüssigkeit der Pumpe (1) und ein Teil der Druckflüssigkeit, weiche aus der Rückflußleitung (2 bzw. 3) entnommen wird, immer dann direkt in das Druckflüssigkeitsreservoir (12) fließt, wenn die Druckflüssigkeit, welche der Rückflußleitung (2 bzw. 3) entnommen wurde, ein bestimmtes Druckniveau übersteigt,
- wobei die Entnahmestelle der Druckflüssigkeit aus der Rückflußleitung (2 bzw. 3) unmittelbar benachbart zu einem Druckbegrenzungsventil (14), durch welches die Druckflüssigkeit oberhalb eines bestimmten Druckniveaus direkt in das Druckmittelreservoir fließt, angeordnet ist.

2. Hydraulischer Antrieb nach Anspruch 1, **dadurch gekennzeichnet, daß** der hydraulische Motor (4) sich im Druckflüssigkeitsreservoir (12) befindet.

3. Hydraulischer Antrieb nach Anspruch 1, **dadurch gekennzeichnet, daß** der hydraulische Motor (4) ein Getriebe (5) antreibt.

4. Hydraulischer Antrieb nach Anspruch 3, **dadurch gekennzeichnet, daß** ein Gehäuse (17) des hydraulischen Motors (4) und ein Gehäuse (20) des Getriebes (5) die äußere Berandung des Druckflüssigkeitsreservoir (12) bilden.

5. Hydraulischer Antrieb nach Anspruch 1, **dadurch gekennzeichnet, daß** ein Ventil (6,7), welches Druckflüssigkeit aus dem Rückfluß des hydraulischen Motors (4) zur Pumpe (1) entnimmt, in einem Gehäuse (17) des hydraulischen Motors (4) integriert ist.

6. Hydraulischer Antrieb nach Anspruch 1, **dadurch gekennzeichnet, daß** ein Ventil (6,7), welches Druckflüssigkeit aus dem Rückfluß des hydraulischen Motors (4) zur Pumpe (1) entnimmt, in einem Gehäuse (17) mit dem Druckbegrenzungsventil (14), welches immer dann Druckflüssigkeit in das Druckflüssigkeitsreservoir (12) abfließen läßt, wenn die Druckflüssigkeit, welche dem Rückfluß des hydraulischen Motors (4) zur Pumpe (1) entnommen wurde, das bestimmte Druckniveau übersteigt, integriert ist.

7. Hydraulischer Antrieb nach Anspruch 1, **dadurch gekennzeichnet, daß** die Druckmittelzuführung zu dem Druckbegrenzungsventil (14), welches immer dann Druckflüssigkeit in das Druckflüssigkeitsreservoir (12) abfließen läßt, wenn die Druckflüssigkeit, welche dem Rückfluß des hydraulischen Motors (4) zur Pumpe (1) entnommen wurde, das bestimmte Druckniveau übersteigt, mit einem Abfluß (26) eines Ventils (7), welches Druckflüssigkeit aus dem Rückfluß des hydraulischen Motors (4) zur Pumpe (1) entnimmt, verbunden ist.

8. Hydraulischer Antrieb nach Anspruch 3 **dadurch gekennzeichnet, daß** das Getriebe (5) ein Untersetzungsgetriebe mit einer Planetenstufe (19) zum Antrieb einer Mischtrommel ist.

9. Hydraulischer Antrieb nach Anspruch 1, **dadurch gekennzeichnet, daß** der Wärmetauscher (12) an ein Gehäuse (17) des hydraulischen Motors (4) angebaut ist.

## Claims

1. Hydraulic drive,
- in which a hydraulic pump (1) delivers to a hydraulic motor (4) hydraulic fluid, which then flows back from the hydraulic motor (4) to the pump (1),
- wherein a charging pump (16) removes hydraulic fluid from a hydraulic fluid reservoir (12) and delivers it into the hydraulic drive,
- wherein some of the hydraulic fluid is removed from the return flow line (2 and/or 3) from the motor (4) to the pump (1) and/or from the pump (1) to the motor (4) and combined with the leakage fluid of the pump (1) and then supplied to the hydraulic fluid reservoir (12),
- wherein the leakage fluid of the pump (1) and the hydraulic fluid removed from the return flow line (2 and/or 3) are combined in a line (9), by means of which the leakage fluid of the pump (1) is carried away to the heat exchanger (11),
**characterized in**
- **that** some of the leakage fluid of the pump (1) and some of the hydraulic fluid, which is removed from the return flow line (2 and/or 3), always flows directly into the hydraulic fluid reservoir (12) when the hydraulic fluid, which has been removed from the return flow line (2 and/or 3), exceeds a specific pressure level,
- wherein the point of removal of the hydraulic fluid from the return flow line (2 and/or 3) is disposed immediately adjacent to a pressure relief valve (14), through which the hydraulic fluid above a specific pressure level flows directly into the pressure medium reservoir.

2. Hydraulic drive according to claim 1, **characterized in that** the hydraulic motor (4) is situated in the hydraulic fluid reservoir (12).

3. Hydraulic drive according to claim 1, **characterized in that** the hydraulic motor (4) drives a gear unit (5).

4. Hydraulic drive according to claim 3, **characterized in that** a housing (17) of the hydraulic motor (4) and a housing (20) of the gear unit (5) form the outer boundary of the hydraulic fluid reservoir (12).

5. Hydraulic drive according to claim 1, **characterized in that** a valve (6, 7), which removes hydraulic fluid from the return flow of the hydraulic motor (4) to the pump (1), is integrated in a housing (17) of the hydraulic motor (4).

6. Hydraulic drive according to claim 1, **characterized in that** a valve (6, 7), which removes hydraulic fluid from the return flow of the hydraulic motor (4) to the pump (1), is integrated in a housing (17) with the pressure relief valve (14), which always allows hydraulic fluid to flow off into the hydraulic fluid reservoir (12) when the hydraulic fluid, which has been removed from the return flow of the hydraulic motor (4) to the pump (1), exceeds the specific pressure level.

7. Hydraulic drive according to claim 1, **characterized in that** the pressure medium supply to the pressure relief valve (14), which always allows hydraulic fluid to flow off into the hydraulic fluid reservoir (12) when the hydraulic fluid, which has been removed from the return flow of the hydraulic motor (4) to the pump (1), exceeds the specific pressure level, is connected to an outlet (26) of a valve (7), which removes hydraulic fluid from the return flow of the hydraulic motor (4) to the pump (1).

8. Hydraulic drive according to claim 3, **characterized in that** the gear unit (5) is a step-down gear unit with a planetary step (19) for driving a mixer drum.

9. Hydraulic drive according to claim 1, **characterized in that** the heat exchanger (12) is mounted onto a housing (17) of the hydraulic motor (4).

## Revendications

1. Transmission hydraulique
- dans laquelle une pompe hydraulique (1) refoule un liquide sous pression vers un moteur hydraulique (4), ce liquide circulant ensuite à nouveau du moteur hydraulique (4) vers la pompe (1),
- dans laquelle une pompe de remplissage (16) prélève du liquide sous pression dans un réservoir de liquide sous pression (12) et le refoule vers la transmission hydraulique,
- dans laquelle une partie du liquide sous pression est prélevée dans la conduite de reflux (2 ou 3) du moteur (4) vers la pompe (1) ou de la pompe (1) vers le moteur (4) et converge vers le liquide de fuite de la pompe (1) puis est amenée dans un échangeur de chaleur (11), enfin dans le réservoir de liquide sous pression (12),
- dans laquelle le liquide de fuite de la pompe (1) et le liquide sous pression prélevé dans la conduite de reflux (2 ou 3) convergent dans une conduite (9) par laquelle le liquide de fuite de la pompe (1) est évacuée vers l'échangeur de chaleur (11).
**caractérisée en ce que,**
- une partie du liquide de fuite de la pompe (1) et une partie du liquide sous pression prélevé dans la conduite de reflux (2 ou3) s'écoulent ensuite toujours directement dans le réservoir de liquide sous pression (12) lorsque le liquide sous pression prélevé dans la conduite de reflux (2 ou 3) dépasse un certain niveau de pression,
- le point de prélèvement de liquide sous pression dans la conduite de reflux (2 ou 3) est placé à côté d'une vanne de limitation de pression (14) grâce à laquelle le liquide sous pression s'écoule directement dans le réservoir de liquide sous pression lorsqu'il atteint un niveau de pression déterminé.

2. Transmission hydraulique selon la revendication 1, **caractérisée en ce que** le moteur hydraulique (4) se trouve dans le réservoir de liquide sous pression (12).

3. Transmission hydraulique selon la revendication 1, **caractérisée en ce que** le moteur hydraulique (4) entraîne un train d'engrenages (5).

4. Transmission hydraulique selon la revendication 3, **caractérisée en ce qu**'un boîtier (17) du moteur hydraulique (4) et un boîtier (20) du train d'engrenages (5) forment l'enveloppe externe du réservoir de liquide sous pression (12).

5. Transmission hydraulique selon la revendication 1, **caractérisée en ce qu**'une vanne (6,7), prélevant du liquide sous pression dans le reflux du moteur hydraulique (4) vers la pompe (1), est intégrée dans un boîtier (17) du moteur hydraulique (4).

6. Transmission hydraulique selon la revendication 1, **caractérisée en ce qu**'une vanne (6,7), prélevant du liquide sous pression dans le reflux du moteur hydraulique (4) vers la pompe (1), est intégrée dans un boîtier (17) avec une vanne de limitation de pression (14) laissant toujours sortir du liquide sous pression vers le réservoir de liquide sous pression (12) lorsque le liquide sous pression prélevé dans le reflux du moteur hydraulique (4) vers la pompe (1) dépasse un niveau de pression déterminé.

7. Transmission hydraulique selon la revendication 1, **caractérisée en ce que** l'alimentation en fluide de la vanne de limitation de pression (14) laissant toujours sortir du liquide sous pression vers le réservoir de liquide sous pression (12) lorsque le liquide sous pression prélevé dans le reflux du moteur hydraulique (4) vers la pompe (1) dépasse le niveau de pression déterminé, est reliée à un trop-plein (26) d'une vanne (7) prélevant du liquide sous pression dans le reflux du moteur hydraulique (4) vers la pompe (1).

8. Transmission hydraulique selon la revendication 3, **caractérisée en ce que** le train d'engrenages (5) est un démultiplicateur à engrenage planétaire (19) pour l'entraînement d'un tambour mélangeur.

9. Transmission hydraulique selon la revendication 1, **caractérisée en ce que** l'échangeur de chaleur (11) est monté sur un boîtier (17) du moteur hydraulique (4).
